# FASCICULE DE BREVET EUROPEEN

(11) **EP 1 002 941 B1**
(45) Date de publication et mention de la délivrance du brevet: **19.02.2003**
(21) Numéro de dépôt: 99402867.8
(22) Date de dépôt: 19.11.1999
(51) Int. Cl.: F02B 23/10, F02F 1/24

(54) **Moteur à combustion interne à allumage commandé et à injection directe**
Fremdgezündete und direkteingespritzte Brennkraftmaschine
Spark ignited and direct injected internal combustion engine

(30) Priorité: 20.11.1998 FR 9814622
(43) Date de publication de la demande: 24.05.2000
(73) Titulaire: Renault s.a.s., 92100 Boulogne Billancourt (FR)
(72) Inventeur: Bartalini, Michel, 93330 Neuilly S/Marne (FR); Gastaldi, Patrick, 91190 GIF S/Yvette (FR)

(56) Documents cités:
- EP-A- 0 875 672
- DE-A- 19 703 400
- US-A- 5 775 288

## Description

L'invention concerne un moteur à combustion interne à allumage commandé et à injection directe.

L'invention concerne plus particulièrement un moteur à combustion interne à injection directe, du type dans lequel un cylindre est délimité axialement vers le haut par une face inférieure d'une culasse, du type comportant au moins un conduit d'admission et au moins un conduit d'échappement qui débouchent, chacun par l'intermédiaire d'une soupape correspondante, dans la face inférieure de la culasse, et du type comportant un injecteur de carburant implanté de manière à déboucher dans une cavité de dégagement qui est aménagée dans une partie radiale externe d'un des pans de la face inférieure de la culasse et qui s'étend radialement en direction de l'axe du cylindre.

Dans les moteurs à combustion interne et à allumage commandé, l'utilisation de l'injection directe permet d'optimiser le fonctionnement du moteur avec des mélanges dits "pauvres", c'est-à-dire des mélanges carburés dans lesquels il existe un fort excès d'air par rapport à la quantité de carburant introduite dans le cylindre.

L'utilisation des mélanges pauvres permet notamment de réduire de manière importante la consommation de carburant mais aussi de réduire la température maximale atteinte au cours de la combustion, ce qui permet de diminuer la production de substances polluantes telles que les oxydes d'azote (NOx).

De même, l'excès d'air permet d'éviter qu'une partie du carburant reste imbrûlée après la combustion et soit évacuée avec les gaz d'échappement.

Le mélange carburé qui résulte de l'injection du carburant dans le cylindre peut être un mélange homogène ou un mélange stratifié dans lequel le rapport air/carburant n'est pas constant dans tout le cylindre. Par exemple, on peut chercher à obtenir une plus forte concentration de carburant au voisinage de la bougie d'allumage pour faciliter le démarrage de la combustion.

Dans tous les cas, on cherche à éviter au maximum que le carburant ne soit projeté directement contre une des parois qui définissent le cylindre. Or, l'injecteur est agencé dans la culasse de manière à déboucher dans le cylindre au travers d'un orifice approprié. Si l'orifice est trop étroit, le jet de carburant projeté par l'injecteur, qui est généralement conique, risque alors de heurter les parois qui délimitent cet orifice, notamment dans le cas où l'injecteur est légèrement retiré dans l'orifice par rapport au cylindre ou dans le cas où l'injecteur présente un cône de projection particulièrement ouvert.

Pour remédier à ce problème, il a déjà été proposé, notamment dans le document DE-A-197.03.400, d'aménager l'extrémité débouchante de l'orifice dans lequel est installé l'injecteur. En effet, l'injecteur est alors en retrait par rapport au plan incliné de la face inférieure en toit de la culasse. Dans ce document, l'extrémité débouchante est réalisée sous la forme d'une cavité qui s'évase au fur et à mesure que l'on se dirige radialement vers l'intérieur du cylindre, en direction de l'axe de celui-ci. On voit plus particulièrement à la figure 3 de ce document qu'il a été choisi dans ce dispositif de rendre la cavité la plus large possible, notamment selon la direction transversale perpendiculaire à un plan contenant à la fois l'axe de l'injecteur et l'axe du cylindre.

Cette solution est satisfaisante en ce qu'elle permet d'éviter que le carburant ne vienne directement au contact d'une paroi, ce qui limite de manière importante les risques de condensation du carburant.

Toutefois, notamment lorsque l'on souhaite réaliser des charges stratifiées en mélange pauvre, il est nécessaire aussi de bien maîtriser la direction de projection du carburant dans le cylindre. En effet, si tel n'est pas le cas, celui-ci aura tendance à être dispersé dans tout le cylindre, empêchant d'obtenir l'accumulation de carburant par exemple au niveau de la bougie, ce qui, dans le cas des mélanges stratifiés particulièrement pauvres, est une condition nécessaire à une bonne inflammation du mélange air/carburant.

Or, on s'est aperçu qu'avec le dispositif illustré dans le document DE-A-197.03.400, la forme particulièrement évasée de l'extrémité débouchante de l'orifice par lequel est injecté le carburant rendait la maîtrise de la direction de projection délicate. En effet, l'écartement progressif des parois délimitant cet orifice tend à augmenter dans des proportions importantes la divergence du jet de carburant, au détriment d'une bonne stratification du mélange.

L'invention a donc pour objet de proposer une nouvelle conception d'une chambre de combustion pour un moteur à combustion interne à injection directe qui permet de concilier à la fois une bonne maîtrise de la direction d'injection du carburant, et d'éviter malgré tout tout contact direct du carburant avec l'une des parois qui délimitent le cylindre.

Dans ce but, l'invention propose un moteur du type décrit précédemment, caractérisé en ce que la cavité présente une largeur transversale décroissante lorsqu'on parcoure la cavité radialement de l'extérieur vers l'intérieur en direction de l'axe du cylindre.

Selon d'autres caractéristiques de l'invention :
- la cavité de dégagement est sensiblement tangente à un plan perpendiculaire à l'axe du cylindre, la cavité s'étendant en dessous du plan ;
- en coupe par un plan quelconque perpendiculaire au rayon selon lequel s'étend la cavité, la cavité de dégagement présente sensiblement un profil en arc de cercle ;
- l'arc de cercle est inférieur à un demi-cercle ;
- la face inférieure de la culasse présente une forme de toit à deux pans inclinés délimités par une arête sommitale, et la cavité de dégagement est aménagée dans l'un des pans ;
- le pan dans lequel est formée la cavité de dégagement comporte deux soupapes, et la cavité comporte une partie radiale interne qui est formée entre les sièges des deux soupapes ; et
- le moteur comporte une bougie d'allumage qui est implantée sensiblement au centre de la face inférieure de la culasse.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique et partielle en coupe axiale d'un moteur conforme aux enseignements de l'invention ;
- la figure 2 est une vue, de dessous selon l'axe du cylindre, de la face inférieure de la culasse du moteur de la figure 1 ;
- la figure 3 est une vue de détail agrandie de la figure 1 illustrant plus particulièrement la cavité de dégagement selon l'invention ;
- les figures 4 et 5 sont des vues en section, respectivement selon les lignes 4-4 et 5-5 de la figure 3 ; et
- la figure 6 est une vue schématique en perspective illustrant la forme de la cavité de dégagement selon l'invention.

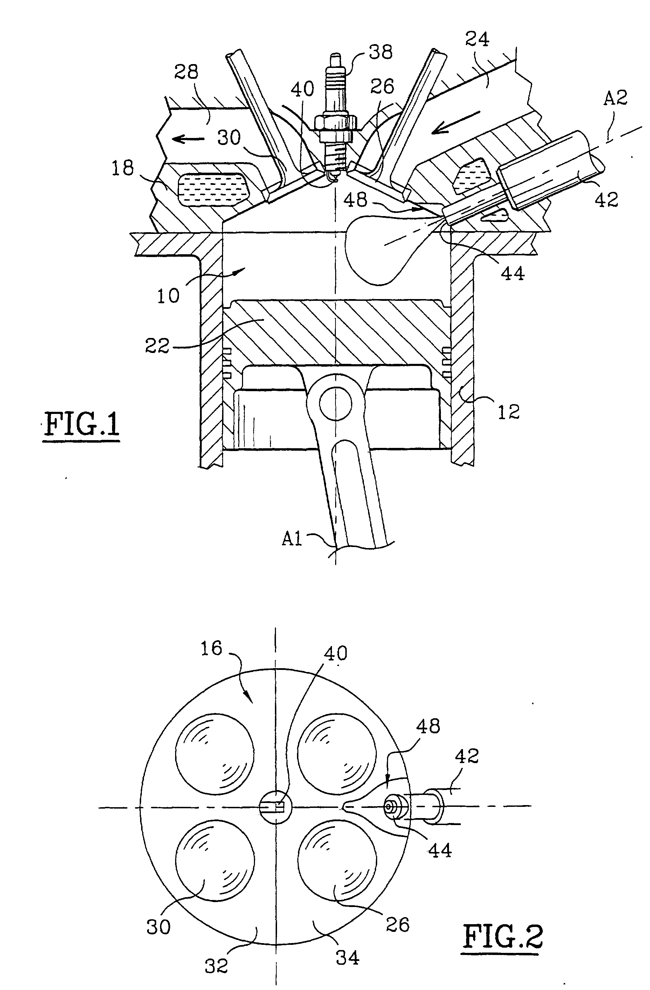

On a illustré sur la figure 1 un cylindre 10 d'un moteur à combustion interne à allumage commandé et à injection directe. Le cylindre 10, d'axe A1, est délimité dans un bloc-moteur 12 par une paroi cylindrique 14. Le cylindre 10 est délimité vers le haut par la face inférieure 16 d'une culasse 18 et, vers le bas, par la face supérieure 20 d'un piston 22 qui, de manière connue, est animé d'un mouvement alternatif de translation selon l'axe A1.

Deux conduits d'admission 24 d'air sont aménagés dans la culasse 18 de manière à déboucher dans la face inférieure 16 de celle-ci. La communication entre les conduits d'admission 24 et le cylindre 10 est autorisée ou interrompue par des soupapes d'admission commandées 26.

De la même manière, des conduits d'échappement 28 débouchent dans le cylindre 10 par l'intermédiaire de soupapes d'échappement 30.

Dans l'exemple de réalisation illustré sur les figures, la face inférieure 16 de la culasse 18 est configurée en « toit » de sorte qu'elle présente deux pans 32, 34 qui sont sensiblement plans et inclinés de part et d'autre d'une arête sommitale 36. L'angle du toit est par exemple compris entre 125 et 145 degrés. Les conduits d'admission 24 débouchent dans l'un 34 des pans tandis que les conduits d'échappement 28 débouchent dans l'autre 32 des pans.

L'arête sommitale 36 et l'axe A1 du cylindre 10 déterminent ainsi un plan de référence qui délimite dans ce cylindre un côté admission et un côté échappement.

S'agissant d'un moteur à allumage commandé, une bougie d'allumage 38 est vissée dans la culasse 16 de telle sorte que ses électrodes 40 débouchent dans le cylindre 10, sensiblement sur l'axe A1 de celui-ci et donc au niveau de l'arête sommitale 36 de la face inférieure 16 de la culasse 18.

Par ailleurs, un injecteur 42 est implanté dans la culasse 18, juste en dessous d les conduits d'admission 24, de manière qu'un nez 44 de l'injecteur 42 débouche dans le cylindre 10 pour pouvoir projeter directement à l'intérieur de celui-ci un jet de carburant.

Dans l'exemple de réalisation de l'invention illustré sur les figures, l'injecteur 42 projette un jet de carburant sensiblement conique, l'axe du jet de carburant étant sensiblement confondu avec celui A2 de l'injecteur 42 qui, comme on peut le voir sur les figures 1 et 2, forme un angle α d'environ 20 à 40° avec un plan P perpendiculaire à l'axe A1 du cylindre 10. L'axe A2 de l'injecteur 42 est contenu dans un plan qui est celui de la figure 1, c'est-à-dire le plan perpendiculaire à l'arête sommitale 36.

Conformément aux enseignements de l'invention, le nez 44 de l'injecteur 42 est reçu dans un orifice 46 qui débouche non pas directement dans le pan 34 de la face inférieure 16 de la culasse 18, mais dans une cavité de dégagement 48 aménagée en creux dans le pan 34. Bien entendu, cette cavité 48 est aménagée dans une partie radiale externe du cylindre, et elle est orientée selon un rayon issu de l'axe A1 qui passe entre les deux soupapes d'admission 26.

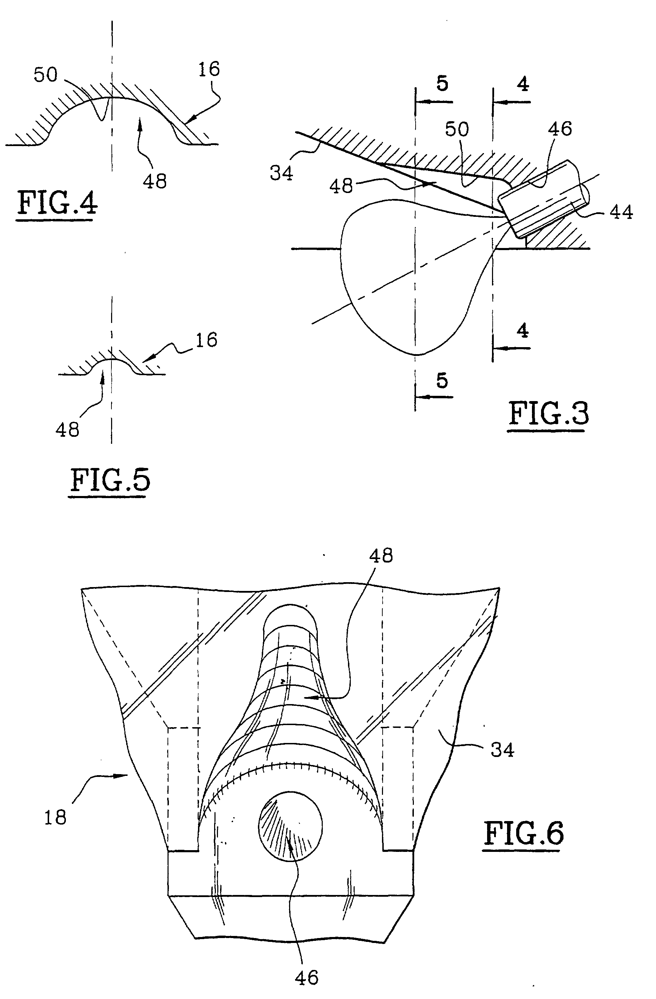

Selon un aspect de l'invention, on peut voir par exemple aux figures 4 et 5 que, en coupe par un plan perpendiculaire au rayon selon lequel s'étend la cavité 48, celle-ci présente un profil en arc de cercle ouvert le bas. Selon un autre aspect de l'invention, la paroi qui délimite la cavité de dégagement 48 est tangente, sensiblement sur toute sa longueur le long du rayon sur lequel elle s'étend, à un plan perpendiculaire à l'axe A1 du cylindre, la cavité étant de plus agencée en dessous de ce plan. De la sorte, l'ensemble des cercles qui forment la trace de la cavité en coupe par des plans perpendiculaires à ce rayon, présentent leur point le plus haut aligné sur une ligne droite 50.

Cette ligne droite 50 est sensiblement perpendiculaire à l'axe A1, légèrement inclinée vers le haut, lorsqu'on se déplace radialement de l'extérieur vers l'intérieur. Comme on peut le voir notamment sur les figures 2 et 6, la cavité 48 délimite, à son intersection avec le plan du pan 34 de la face inférieure de la culasse 16, un contour 52 qui est sensiblement symétrique par rapport au plan contenant les axes A1 du cylindre et A2 de l'injecteur.

Le contour 50 représente ainsi sensiblement, dans un plan de coupe donné, la largeur transversale maximale de la cavité dans ce plan. Selon l'invention, cette largeur transversale de la cavité est maximale à l'extrémité radiale externe de la cavité de dégagement 48. Ensuite, en progressant radialement vers l'intérieur, cette largeur transversale est décroissante. Par décroissante, on signifie que, pour deux plans de coupe successifs perpendiculaires au rayon selon lequel s'étend la cavité 48, la largeur de la cavité 48 dans le plan radialement le plus à l'intérieur est inférieure à la largeur de la cavité dans le plan radialement le plus à l'extérieur.

Comme on peut le voir sur les figures 2 et 4, la cavité 48 présente à son extrémité radiale externe une largeur transversale supérieure au diamètre du nez d'injecteur 44 et elle se rétrécit progressivement au fur et à mesure que l'on pénètre radialement vers l'intérieur en direction de l'axe A1 du cylindre, de telle sorte que la cavité 48 s'étend, à son extrémité radiale interne, entre les deux sièges de soupape d'admission 26.

## Revendications

1. Moteur à combustion interne à injection directe, du type dans lequel un cylindre est délimité axialement vers le haut par une face inférieure (16) d'une culasse (18), du type comportant au moins un conduit d'admission (24) et au moins un conduit d'échappement (28) qui débouchent, chacun par l'intermédiaire d'une soupape (26, 30) correspondante, dans la face inférieure (16) de la culasse (18), et du type comportant un injecteur de carburant (42) implanté de manière à déboucher dans une cavité de dégagement (48) qui est aménagée dans une partie radiale externe de la face inférieure (16) de la culasse (18) et qui s'étend radialement en direction de l'axe (A1) du cylindre,
**caractérisé en ce que** la cavité de dégagement (48) présente une largeur transversale décroissante lorsqu'on parcoure la cavité radialement de l'extérieur vers l'intérieur en direction de l'axe (A1) du cylindre.

2. Moteur selon la revendication 1, **caractérisé en ce que** la cavité de dégagement (48) est sensiblement tangente à un plan perpendiculaire à l'axe (A1) du cylindre, la cavité (48) s'étendant en dessous du plan.

3. Moteur selon l'une quelconque des revendications précédentes, **caractérisé en ce que**, en coupe par un plan quelconque perpendiculaire au rayon selon lequel elle s'étend, la cavité de dégagement (48) présente sensiblement un profil en arc de cercle.

4. Moteur selon la revendication 3, **caractérisé en ce que** l'arc de cercle est inférieur à un demi-cercle.

5. Moteur selon l'une quelconque des revendications précédentes, **caractérisé en ce que** la face inférieure (16) de la culasse (18) présente une forme de toit à deux pans inclinés (32, 34) délimités par une arête sommitale (36), et **en ce que** la cavité de dégagement (48) est aménagée dans l'un (34) des pans.

6. Moteur selon la revendication 5, **caractérisé en ce que** le pan (34) dans lequel est formée la cavité de dégagement (48) comporte deux soupapes (26), et **en ce que** la cavité (48) comporte une partie radiale interne qui est formée entre les sièges des deux soupapes.

7. Moteur selon l'une quelconque des revendications précédentes, **caractérisé en ce que** le moteur comporte une bougie d'allumage (38) qui est implantée sensiblement au centre de la face inférieure (16) de la culasse (18).

## Claims

1. A direct-injection internal combustion engine of the type in which a cylinder is axially delimited upwardly by a lower face (16) of a cylinder head (18), of the type comprising at least one induction passage (24) and at least one exhaust passage (28) which each open by way of a corresponding valve (26, 30) at the lower face (16) of the cylinder head (18), and of the type comprising a fuel injector (42) installed in such a way as to open into a clearance cavity (18) which is provided in an external radial part of the lower face (16) of the cylinder head (18) and which extends radially in the direction of the axis (A1) of the cylinder,
**characterised in that** the clearance cavity (48) is of a transverse width which decreases when passing across the cavity radially from the exterior towards the interior in the direction of the axis (A1) of the cylinder.

2. An engine according to claim 1 **characterised in that** the clearance cavity (48) is substantially tangential to a plane perpendicular to the axis (A1) of the cylinder, the cavity (48) extending below the plane.

3. An engine according to any one of the preceding claims **characterised in that**, in section in any plane perpendicular to the radius along which it extends, the clearance cavity (48) is substantially of an arcuate profile.

4. An engine according to claim 3 **characterised in that** the arc is less than a semicircle.

5. An engine according to any one of the preceding claims **characterised in that** the lower face (16) of the cylinder head (18) is of a pent-roof shape with two inclined surface portions (32, 34) delimited by a summit edge (36) and that the clearance cavity (48) is provided in one (34) of the surface portions.

6. An engine according to claim 5 **characterised in that** the surface portion (34) in which the clearance cavity (48) is formed comprises two valves (26) and that the cavity (48) comprises an internal radial portion which is formed between the seats of the two valves.

7. An engine according to any one of the preceding claims **characterised in that** the engine comprises a spark plug (38) which is installed substantially at the centre of the lower face (16) of the cylinder head (18).

## Patentansprüche

1. Verbrennungsmotor mit Direkteinspritzung, bei dem ein Zylinder in Axialrichtung oben durch eine Unterseite (16) eines Zylinderkopfes (18) begrenzt ist, der mindestens eine Einlassleitung (24) und mindestens eine Auslassleitung (28) aufweist, die jeweils über ein zugehöriges Ventil (26,30) in der Unterseite (16) des Zylinderkopfes (18) münden und der eine Kraftstoffeinspritzdüse (42) aufweist, die derart eingesetzt ist, dass sie in einer Austrittsaussparung (48) mündet, welche in einem radial aussen liegenden Abschnitt der Unterseite (16) des Zylinderkopfes (18) ausgebildet ist und die sich radial in Richtung der Zylinderachse (A1) erstreckt, **dadurch gekennzeichnet**; das die Austrittsaussparung (48) eine Breite in Querrichtung aufweist, die in Radialrichtung von aussen nach innen in Richtung zur Zylinderachse (A1) hin abnimmt.

2. Motor nach Anspruch 1, **dadurch gekennzeichnet, dass** die Austrittsaussparung (48) im wesentlichen tangential zu einer Ebene senkrecht zur Zylibderachse (A1) verläuft, wobei die Austrittsaussparung (48) unterhalb der Ebene angeordnet ist.

3. Motor nach einem der vorhergehenden Ansprüche, **dadurch gekennzeichnet, dass** die Austrittsaussparung (48) im Schnitt durch eine beliebige Ebene senkrecht zum Radius entlang dem sie sich erstreckt ein im wesentlichen kreisbogenförmiges Profil aufweist.

4. Motor nach Anspruch 3, **dadurch gekennzeichnet, dass** der Kreisbogen kleiner als ein Halbkreis ist.

5. Motor nach einem der vorhergehenden Ansprüche, **dadurch gekennzeichnet, dass** die Unterseite (16) des Zylinderkopfes (18) die Form eines Daches mit zwei geneigten Dachschrägen (32,34) aufweist, die durch einen Dachfirst (36) begrenzt sind und dass die Austrittsaussparung (48) in einer (34) der Dachschrägen ausgebildet ist.

6. Motor nach Anspruch 5, **dadurch gekennzeichnet, dass** die Dachschräge (34), in der die Austrittsaussparung (48) ausgebildet ist, zwei Ventile (26) aufweist und dass die Austrittsaussparung (48) einen inneren radialen Abschnitt aufweist, der sich zwischen den Sitzen der beiden Ventile erstreckt.

7. Motor nach einem der vorhergehenden Ansprüche, **dadurch gekennzeichnet, dass** der Motor eine Zündkerze (38) aufweist, die im wesentlichen in der Mitte der Unterseite (16) des Zylinderkopfes (18) eingesetzt ist.
